# EUROPEAN PATENT SPECIFICATION

(11) **EP 2 807 920 B1**
(45) Date of publication and mention of the grant of the patent: **25.04.2018**
(21) Application number: 14001843.3
(22) Date of filing: 27.05.2014
(51) Int. Cl.: A01K 13/00, A47L 9/06, A47L 9/04, A47L 7/00, A47L 7/02

(54) **Hair remover**
Haarentferner
Décapant pour cheveux

(30) Priority: 28.05.2013 IT TO20130426
(43) Date of publication of application: 03.12.2014
(73) Proprietor: Panico, Silvia, 14015 San Damiano d'Asti (AT) (IT)
(72) Inventor: Panico, Silvia, 14015 San Damiano d'Asti (AT) (IT)

(56) References cited:
- EP-A1- 1 949 839
- DE-U1-202004 009 187
- GB-A- 2 458 221
- US-B1- 6 170 119

## Description

### 1: Field of the invention

Textile cleaning and maintenance in all the use fields

### 2: Aim of invention

To remove hairs and lint, pet hairs specifically, from fabrics and textile tissues generally used in household, industrial and community environments.

### 3: Description of the invention

The invention is defined in claims 1 and 6, respectively.

The hair/lint air removing device that we start to describe, presents itself first of all to the residual hair/lint cleaning before and after washing operations of fabrics, being themselves clothing or furnishing textiles like curtains, carpets or blankets commonly used in all of working, recreative, household environments. This invention, being itself small in dimensions, allows careful and localized interventions directly on the fabrics also in very small cleaning area without big effort. The protection mesh (2,4) makes possible the operation also on the fabrics realized by delicate tissues.

The device can replace very well normal devices removing lint that stress too much treated fabrics. The same invention can be also used for normal and daily cleaning operations.

In the known technique we have lint removers, consisting in electric apparatus, that, through different devices with electric or battery functioning, like rotating blades, make radical cleaning of the fabric but marking it deeply, sometimes damaging it and make it unserviceable.

The common manual devices, like brushes, are only able to extract the superficial hairs and lint that are already spurred on during the wash operations. As well, these brushes are commonly realized with bristles very hard that, after more cleaning cycles, will certainly damage the working fabric.

Referring to the known technique there are suction hair removal's systems, like Patent EP 1 949 839 A1, to whom it needs to associate a vacuum cleaner suitable for catch human and pet hairs (paragraph 0006) using the aspiration through an opening leaned on the fabric (paragraph 0003); we evidence that the same, noted the big dimensions, is used exclusively over very large areas to clean, like carpets, but it can't absolutely be used on clothing fabrics and it can't be certainly considered a light device to lift up and keep in hands for the use (it is used with one hand certainly, but the device is always in the condition to be used touching the floor). As well, we don't disclose details about the function specifically to the extraction of the lint (fluff shape residuals present on fabrics in wool most of all, that normally appear with the usury of the fabric).

Referring to the other known technique Patent GB 2 458 221 A, (page 7 - page 13 line 7) we don't note references to clothing fabrics or lint extraction like our description in paragraph [008]. It's probable that, being the device small in dimensions, it can be easily lift up and used with one hand, but its use method traces back to "the cleaner may find particular application in the cleaning of pet hair from carpets" (extract of resume (57) Patent GB 2 458 221 A).

These devices, manual or electric, are inefficient in the extraction of pet hair, that, embedded in fibers (1,1), cause resistance force regards to brushes and vacuum cleaner of common use.
Differently, present invention is featured by two different and contemporaneous functions, that, through the external aspiration (2,7), in the 1^{st} function, lift up the hair sufficiently to allow the extraction by tweezers placed on the rotating device (2,5), and, then, through the 2^{nd} function the hair is extracted with a parallel scrolling movement as regard of the fabric.

Present invention wants to realize an apparatus that contains inside itself a series of functions, hair remover (2,5), lint remover (2,6). With particular attention to the worked fabric.

Aim of this invention is that the above-mentioned apparatus has also the double function of removing bobbles (2,6) and hairs (2,5) from fabrics in wool or natural, artificial or synthetic fibers, with only one operation arranged.

Not the last aim of this invention is the possibility to have an aspirator hair/lint removing device without expensive operations of maintenance.

It must be a portable accessorize, that can be connect to power supply 220/240 o 110/125 volt, or also used with common reloaded battery or, again, common lighter on cars.

### Brief description of the drawings

The invention is made of a portable case to hold in hands (2,3), a rotating device, a roll, (2,5) with tweezers cam or spring loaded (3,5) arranged so as to be moved by the engine to do a catching and releasing movement (4,9-10) during the rotation, a device consisting of rotating blades fixed to a driving head (2,6), a plug for aspirator device (2,7), a storage compartment for removed waste (2,8) and a perforated mesh placed on the inferior part of the cover (2,4) that makes a division between the fabric and the cutting parts and it has also the function to allow the entry of the fabric part inside the rotating blades (3,6) compartment (3,3), being itself clothing or furnishing, in a minimal sufficient amount for the removal of the lint.

According with an execution form, tweezers (4,9-10) are placed in a totally coplanar sense of direction. A favorite direction is a diverging direction.
According with an execution form, rotating blades (6,14-15) are placed in trim as regards to the fabric to be cleaned.
According with a favorite execution form, tweezers (4,9-10) are arranged so as to be driven by the motor with a rotation movement and a parallel running as regards to the fabric that has hair to remove.

According with a favorite execution form, rotating blades (6,14-15) are aligned with fabric to be cleaned. According with a first version, the first and the second tweezers (4,9-10) can be placed are arranged so as to be on the same plane.

According with a second version, the first and the second tweezers (4,9-10) can be placed on parallel planes.

Other characteristics and advantages of hair air removing device/lint removers device will come out better from the following detailed description of some of its parts, given at indicative and not limitative title with reference to enclosed drawings.

### Detailed description of the drawings

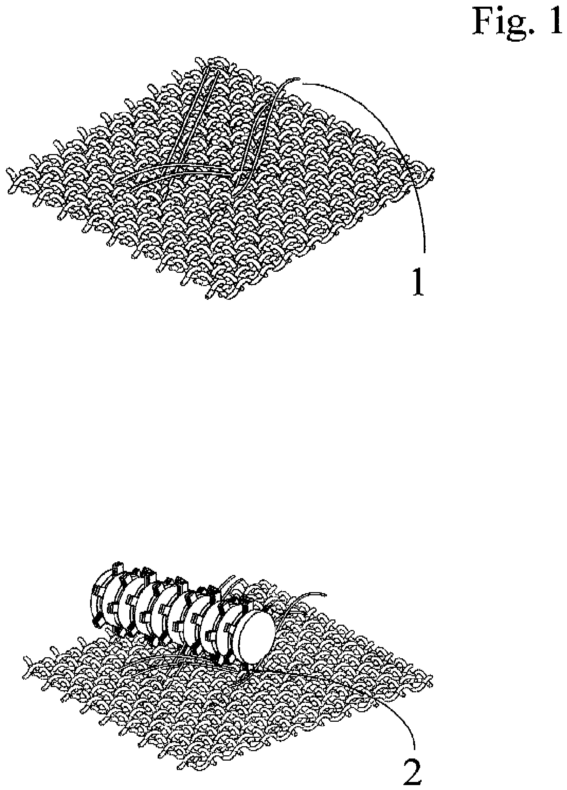

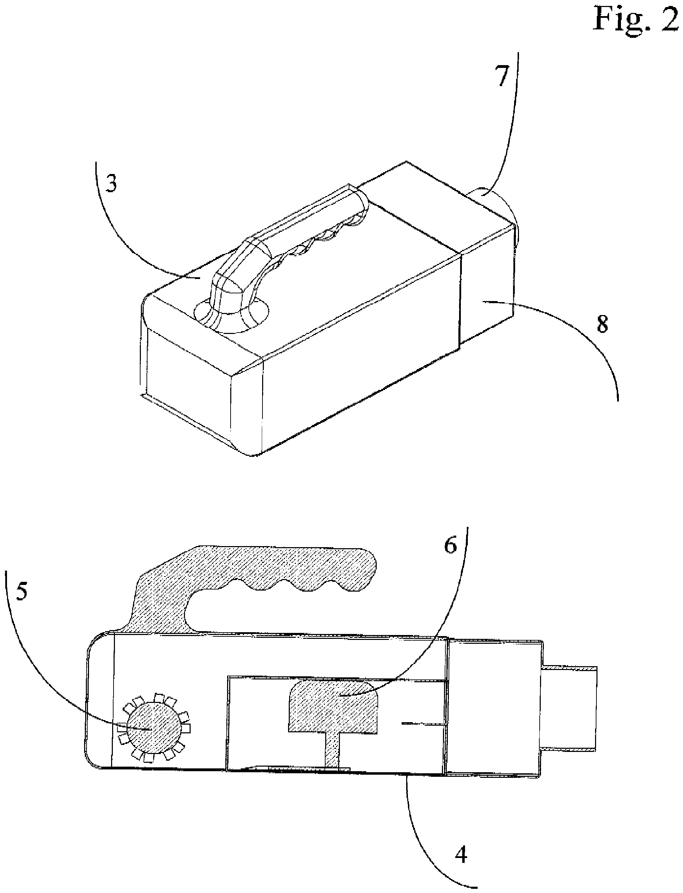

Knowing functions and constructions are omitted
- FIG. 2 is an isometric and sectional view of an hair air removing device/lint remover.

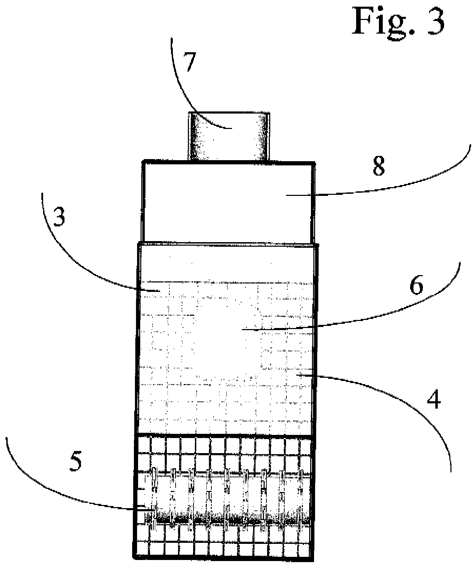

- FIG. 3 is a top plan view in transparence of an hair air removing device/lint remover (2).
- FIG. 4 (4,3-8) is a plan view from (3) in transparence of picture (2) of an hair air removing device/lint remover.

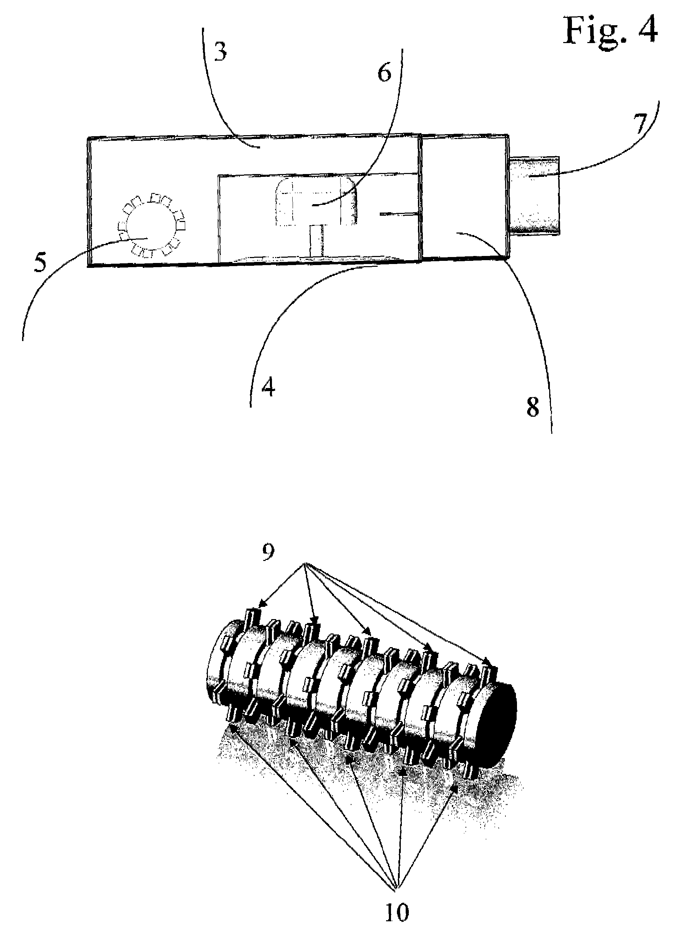

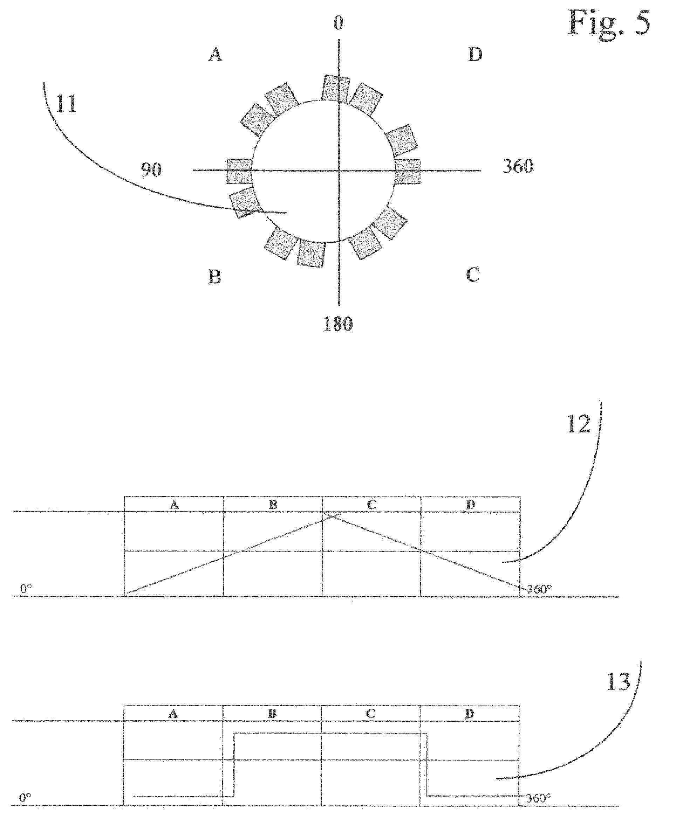

- FIG. 4 (4,9-10) (5,11) is a perspective picture of rotating device with tweezers.

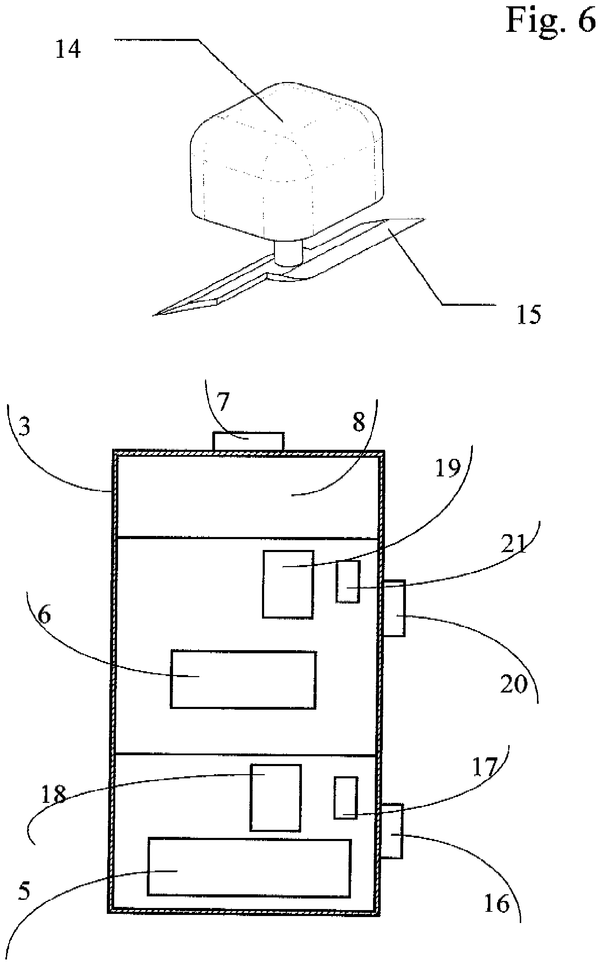

- FIG. 6 (6,14-15) is a perspective picture of device consisting of rotating blades.
- FIG. 6 (6,5-8 and 16-21) is a sectional view of the hair air removing device/lint remover driving with electric working.

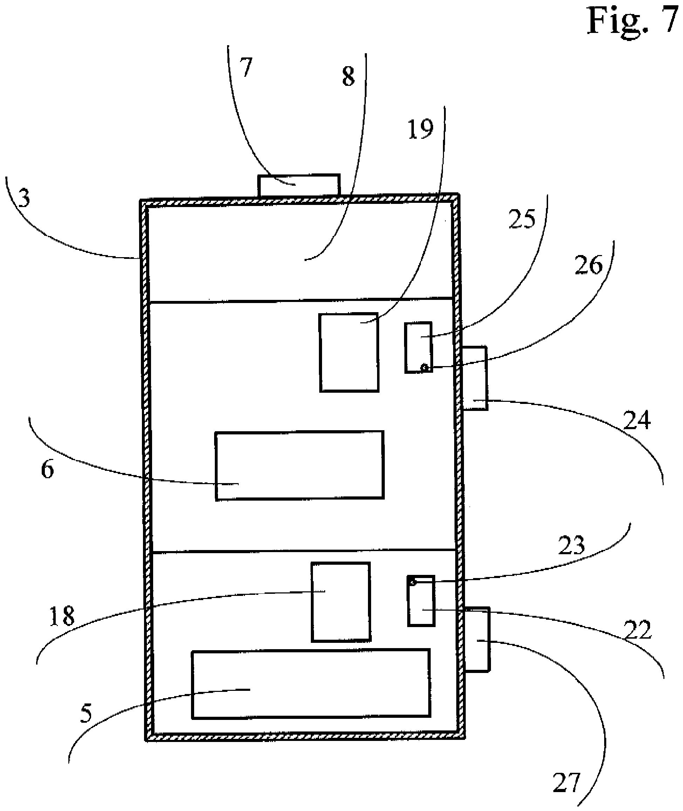

- FIG. 7 (7,5-8 and 18,19 and 22-27) is a sectional view of the hair air removing device/lint removers driving with battery working.

Now considering picture (3), it shows the hair air removing device/lint removers that consisting of a enclosure (3,3), as usually made of a shock proof and plastic material, enclosure that is conformed to hold by hands during its utilization. Inside the cover (3,3) is placed a roll with cam or spring tweezers (3,5), the rotating blades device (3,6), the storage compartment (3,8), a plug for aspirator device (3,7) and a perforated mesh cover (3,4) that allows clothing and furnishing fabrics working without seizing fabric uselessly.

Pictures- (6,5-8 and 16-21) recalls to picture (2,3-8) with the sectional view. So we can define that inside the cover (6,3), tweezers roll (6,5) is driven by an electrical drive (6,18) driven by a plaque (6,16) hand-operable, arranged outside the cover (6,3) and connected to a switch (6,17) coupled to the engine (6,18).
Also the rotating blades device (6,6) is driven by an electric motor (6,19) driven by a plaque (6,20) hand-operable, connected to a switch (6,21) coupled to the engine (6,19). The predisposition suction (6,7) (matched with any suction tube), once plugged, allows to aspirate independently all was extracted from the fabric in an appropriated compartment (6,8) to avoid failures of device (6,5-6).

Picture (4,3-8) in a lateral view corresponding to the end view of picture (2,3-8).

Picture (4,9-10) illustrates tweezers roll in the positions of open pliers (4,9) and closed pliers (4,10).

Picture (5,11) illustrates a sectional view of the tweezers roll where the positions shows the sequential opening and closing movement in spring (5,12) and in cam (5,13).

Pictures (6,14-15) recall to picture (2,3-8) for the device with rotating blades (2,6) where the blades (6,15) are connected to a cover (6,14) that allows it, through a plaque (6,20) hand-operable, arranged outside the cover (6,3) and connected to a switch (6,21) coupled to the engine (6,19), to function electrically.

The predisposition suction (6,7), once plugged, allows to aspire and store independently all was extracted from the fabric in an appropriated compartment (6,8), to avoid failures of device (6,5-6).

The advance and retreat caused by the oscillatory movement of the operator's hand that drives it, determines the catching and the storage of hair or lint that we can find on the brushed space. The hair air removing/suction operations- has the task to rise the hair that is fit inside the fabric (1,2) and, in the same moment, have the task to take it with the tweezers (3,5) to extract it and to send it to container collecting hair (3,8).
The aspiration lint removing/suction operation has the task to attract the fabric, being itself clothing or furnishing, into the rotating blades (3,6) enclosure (3,3), in a minimal sufficient amount for the removal of the lint.

The only component of hair air removing device/lint removers apparatus subject to attrition are batteries of common use, in case of battery utilization.
The invention conceived in that way is susceptible of numerous modifications and variations in the protective ambit defined by the claims standard.

## Claims

1. Hair or lint remover apparatus for the extraction of animal and other hair, lint from clothing and upholstery, composed by a portable enclosure (2) to hold by hand **characterised by**:
a. a rotating device (roller) with spring or cam loaded tweezers (3,5) that lift up the hair sufficiently to allow the pinch and the extraction
b. a device consisting of rotating blades (3,6) attached to a drive head, for the removal of lint
c. a device predisposed for the suction (3,7)
d. a storage compartment for remover waste (3,8)
e. a cover in perforated smooth mesh (3,4) placed in the inferior part touching the fabric

2. Hair or lint remover apparatus for extraction of animal and other hair and lint from clothing and upholstery, according to claim 1 controlled with an electrical drive, wherein the cam or spring loaded tweezers (4,9-10) are arranged in a totally coplanar sense of direction according to which the rotating blades are arranged in a structure aligned with respect to the fabric to be cleaned.

3. Hair or lint remover apparatus for extraction of animal and other hair and lint from clothing and upholstery, according to claim 1 controlled with an electrical drive, wherein the cam or spring loaded tweezers (4,9-10) are arranged so as to be brought by the motor into a rotating motion and sliding parallel in relation to the fabric that holds the hairs to be removed.

4. Hair or lint remover apparatus for the extraction of animal and other hair and lint from clothing and upholstery , according to claim 1 controlled with electrical drive, wherein the cam or spring loaded tweezers (4,9-10) are arranged so as to lie on the same plane

5. Hair or lint remover apparatus for the extraction of the animal and other hair from clothing and upholstery, according to claim 1 controlled with an electrical drive , wherein the cam or spring loaded tweezers (4,9-10) can be placed on parallel plane

6. Hair or lint remover apparatus for the extraction of animal and other and lint from clothing and upholstery of animal and other hair and from clothing and upholstery, according to claim 1 with a controller with a low voltage power supply , 12V, adapted to be connected with a common lighter on cars

## Patentansprüche

1. Gerät entfernen von den Haare oder den Fussels zur Gewinnung der Tierehaare oder Fussels von den Kleidung oder Einrichtung, zusammengesetzt aus der Hülle (2) tragbar zu halten kennzeichnet aus:
a. Eine Rolle mit der Zangen (3,5) Cam-geladen oder Feder-geladen, die aufheben den Haar genug zu ermöglichen die Griff und das Ausziehen
b. Eine Vorrichtung zusammengesetzt aus rotierende Klinge (3,6) angeschlossen an motorisierten Kopf zu entfernen die Fussels
c. Eine Vorrichtung für das Absaugen (3,7)
d. Eine Ablagefach um des Abfall entfernt (3,8)
e. Ein Bezug aus der glatten und perforierten Folie (3,4) in der Unterheit in Kontakt mit dem Stoff

2. Gerät entfernen von den Haare oder den Fussels zur Gewinnung der Tierehaare oder Fussels von den Kleidung oder Einrichtung in Absprache mit der Forderung 1 gesteuert durch einen elektrischen Kopf, wo die Zangen (4,9-10) Cam-geladen oder Feder-geladen sind also völlig planparallel in der Richtung positioniert. In der Weiß, dass die rotierende Klingen aufgestellt den Stoff zu putzen sind

3. Gerät entfernen von den Haare oder den Fussels zur Gewinnung der Tierehaare oder Fussels von den Kleidung oder Einrichtung in Absprache mit der Forderung 1 gesteuert durch einen elektrischen Kopf, wo die Zangen (4,9-10) Cam-geladen oder Feder-geladen sind positioniert. In der Weiß, dass sie durch einen Motor in der Drehung Kontrollieren sind und bei gleiten parallel im Vergleich mit dem Stoff, das enthält die Haare zu entfernen

4. Gerät entfernen von den Haare oder den Fussels zur Gewinnung der Tierehaare oder Fussels von den Kleidung oder Einrichtung in Absprache mit der Forderung 1 gesteuert durch einen elektrischen Kopf, wo die Zangen (4,9-10) Cam-geladen oder Feder-geladen sind auf dem Gleiche Ebene positioniert

5. Gerät entfernen von den Haare oder den Fussels zur Gewinnung der Tierehaare oder Fussels von den Kleidung oder Einrichtung in Absprache mit der Forderung 1 gesteuert durch einen elektrischen Kopf, wo die Zangen (4,9-10) Cam-geladen oder Feder-geladen können auf den parallel Ebenen positioniert werden

6. Gerät entfernen von den Haare oder den Fussels zur Gewinnung der Tierehaare oder Fussels von den Kleidung oder Einrichtung in Absprache mit der Forderung 1 mit Niedervolt-Stromversorgung, 12 V, das kann mit dem Feuerzeug im Auto angeschlossen werden.

## Revendications

1. Appareil d'enlèvement de poils ou peluches pour l'extraction des poils d'animaux ou d'autre, peluches de vêtements et mobilier, composé par une enceinte (2) à prendre en main **caractérisée par**:
a. un dispositif rotatif (rouleaux) avec pinces (3,5) chargées à cames ou ressorts qui soulève le poil suffisamment pour permettre la prise et l'extraction
b. un dispositif avec lames rotatives (3,6) fixé à une tète motrice, pour l'enlèvement des peluches
c. un dispositif prédisposé pour l'aspiration (3,7)
d. un compartiment de stockage pour les déchets supprimés (3,8)
e. une couverture en tôle perforée lisse (3,4) positionnée dans la partie inférieure en contact avec le tissu

2. Appareil d'enlèvement de poils ou peluches pour l'extraction des poils d'animaux ou d'autre, peluches de vêtements et mobilier, en accord avec la revendication 1 contrôlé par une tête motrice, où les pinces (4,9-10) chargées à cames ou ressorts sont placées en sens totalement coplanaire par rapport aux lames rotatives dans une structure alignée en respectant le tissu qui est traité

3. Appareil d'enlèvement de poils ou peluches pour l'extraction des poils d'animaux ou d'autre, peluches de vêtements et mobilier, en accord avec la revendication 1 contrôlé par une tête motrice, où les pinces (4,9-10) chargées à cames ou ressorts sont placées en manière d'être contrôlées par le moteur dans un mouvement rotatif et en glissant parallèlement par rapport au tissu avec les poils à supprimer

4. Appareil d'enlèvement de poils ou peluches pour l'extraction des poils d'animaux ou d'autre, peluches de vêtements et mobilier, en accord avec la revendication 1 contrôlé par une tête motrice, où les pinces (4,9-10) chargées à cames ou ressorts sont placées en manière d'être sur le même plan

5. Appareil d'enlèvement de poils ou peluches pour l'extraction des poils d'animaux ou d'autre, peluches de vêtements et mobilier, en accord avec la revendication 1 contrôlé par une tête motrice, où les pinces (4,9-10) chargées à cames ou ressorts sont placées en manière d'être sur un plan parallèle

6. Appareil d'enlèvement de poils ou peluches pour l'extraction des poils d'animaux ou d'autre, peluches de vêtements et mobilier, en accord avec la revendication 1 avec un contrôle d'alimentation électrique à basse tension, 12V, apte à être connecté avec un simple allume-cigare de voiture.
